Europäisches Patentamt

European Patent Office

Office européen des brevets

(19)

(11) Publication number: **0 227 547**
A2

(12)

# EUROPEAN PATENT APPLICATION

(21) Application number: 86402834.5

(22) Date of filing: 16.12.86

(51) Int. Cl.⁴: **F 16 H 39/00**
B 60 K 17/10

(30) Priority: 24.12.85 JP 289246/85

(43) Date of publication of application:
01.07.87 Bulletin 87/27

(84) Designated Contracting States: DE FR GB IT

(71) Applicant: KABUSHIKI KAISHA ENDOH GIKEN
Miyahara 444-9
Fujinomiya-shi Shizuoka-ken (JP)

(72) Inventor: Endoh, Kenji
Miyahara 444-9
Fujinomiya-shi Shizuoka-ken (JP)

(74) Representative: Phélip, Bruno et al
c/o Cabinet Harlé & Phélip 21, rue de la Rochefoucauld
F-75009 Paris (FR)

(54) Hydraulic transmission.

(57) A hydraulic transmission 2. particularly for a vehicle. having a pump section 6 for discharging pressure fluid. a motor section 10 driven by the pressure fluid for transmitting torque to an output shaft 8. and a throttle section 12 for varying the quantity of pressure fluid from te motor section 10 according to the rotational status thereof.

FIG. 1

EP 0 227 547 A2

**Description**

HYDRAULIC TRANSMISSION

FIELD OF THE INVENTION

This invention relates to a hydraulic transmission and, more particularly, to a hydraulic transmission which can vary an output shaft torque according to the quantity of pressurized fluid discharged, which is simple in construction. inexpensive in cost and useful in practice.

BACKGROUND OF THE INVENTION

Transmissions as used mainly for vehicles include both manual and automatic transmissions. The automatic transmissions include both mechanical and hydraulic automatic transmissions. Such transmissions as noted above can change the speed of the vehicle to improve the running property thereof.

In the typical prior art manual transmission, the simultaneous operation of the acceleration pedal and the change lever or clutch pedal to effect the speed change operation is cumbersome, and the driver is subject to great fatigue when running over a long distance or running in congested city areas.

To preclude this drawback, the automatic transmission has been used. The construction of the automatic transmission mainly uses a combination of a torque converter and a planetary gear transmission. This construction permits running for a long distance and running in congested city areas without speed change operation, thus reducing the driver's fatigue.

However, the automatic transmission having the construction consisting of the torque converter and planetary gear transmission as noted above has such drawbacks that the acceleration property and fuel economy of running the vehicle are deteriorated, the construction is complicated, and the cost is increased.

An object of the present invention is to provide a hydraulic transmission which overcomes the above drawbacks and comprises a pump section for discharging pressurized fluid, a motor section driven by the pressurized fluid for transmitting torque to an output shaft, and a throttle section for varying the quantity of pressurized fluid discharged from the motor section according to the rotational status thereof, so that it permits improvement of the acceleration property at the time of the running of the vehicle compared to a conventional automatic transmission, improves the fuel consumption, simplifies the construction, permits ready manufacture, permits cost reduction and is useful in practical use.

To attain the above object of the present invention, there are provided a pump section for discharging pressurized fluid, a motor section driven by the pressurized fluid for transmitting torque to an output shaft. and a throttle section for varying the quantity of pressurized fluid discharged from the motor section according to the rotational status thereof.

With the above construction. when discharging the pressurized fluid from the pump section with the driving of a prime mover, the motor section is rotated according to the quantity of discharge of pressurized fluid to transmit the torque to the output shaft. When no load is applied to the prime mover, only the torque of the output shaft is increased. When rotating the motor section, the quantity of pressurized fluid discharged from the motor section is varied according to the throttle section according to the rotational status of the motor section, whereby the torque of the motor section is controlled to a predetermined revolving rate.

BRIEF DESCRIPTION OF THE DRAWINGS

Fig. 1 is a schematic view showing a first embodiment of the hydraulic transmission according to the present invention;

Fig. 2 is a schematic view showing a second embodiment of the hydraulic transmission according to the present invention; and

Figs. 3 and 4 are schematic views showing other embodiments of the present invention, with Fig. 3 being a schematic view showing a different construction of the change-over valve and Fig. 4 being a schematic view showing a different construction of the variable throttle valve.

DETAILED DESCRIPTION

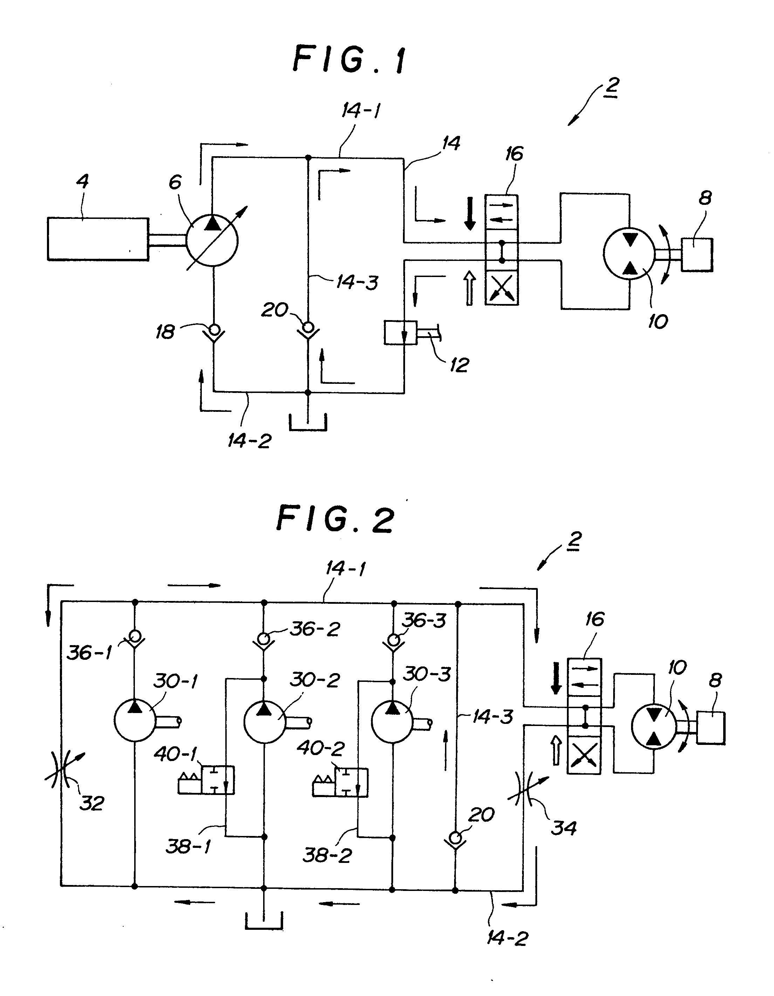

Referring to Fig. 1. reference numeral 2 designates a hydraulic transmission. This hydraulic transmission 2 comprises: a prime mover 4; a variable flow or variable capacity pump, e.g. variable flow pump 6, which serves as a pump section driven by the prime mover 4 for varying the quantity of fluid discharged according to the load; a motor section 10 driven by pressurized fluid from the variable flow pump 6 to transmit torque to an output shaft 8; and a throttle section, e.g. a variable throttle valve 12, for varying the quantity of pressurized fluid discharged from the motor section 10 according to the rotational status thereof.

The variable flow pump 6 and motor section 10 for transmitting the torque to the output shaft 8 are communicated together by a communication passage arrangement or circuit 14. The communication passage arrangement 14 comprises a first communication (i.e., supply) passage 14-1 for supplying the pressurized fluid from the variable flow pump 6 to the motor section 10, a second communication (i.e., return) passage 14-2 for feeding back the pressurized fluid from the motor section 10 to the variable flow pump 6, and a third communication (i.e., bypass) passage 14-3 for direct communication of the second and first communication passages 14-2 and 14-1 without passing through the variable flow pump 6. A change-over valve 16 for switching the forward and reverse runs of the motor section 10 is provided between the first and second communication passage 14-1 and 14-2 at a location between the motor section 1- and the variable flow pump 6. A variable throttle valve 12 is provided in the second communication passage 14-2 on the downstream side of the change-over valve 16 and on the upstream side of the third communication passage 14-3. One-way check valves 18 and 20 are provided in the second communication passage 14-2 on the downstream side of the third communication passage 14-3 and the upstream side of the variable flow pump 6, and in the third communication passage 14-3, respectively.

The operation will now be described.

When the pressurized fluid is discharged from the variable flow pump 6 due to the driving of the prime mover 4, the pressurized fluid is supplied to the motor section 10 through the first communication passage 14-1, thus providing continuous kinetic energy to cause rotation of the motor section 10 according to the quantity of pressurized fluid discharged so as to transmit torque to the output shaft 8. Thus, wheels coupled to the output shaft 8 are rotated to cause running of the vehicle. At this time, the vehicle speed is controlled by varying the quantity of pressurized fluid discharged from the variable flow pump 6 according to the load, e.g. the operation of depressing the accelerator pedal.

When causing rotation of the motor section 10 in the absence of a load on the prime mover 4, i.e., when the sole torque of the output shaft 8 is increased, e.g. when running down a slope, the quantity of pressurized fluid discharged from the motor section 10 is varied through the variable throttle valve 12 according to the rotational status of the motor section 10. At the time of an engine braking operation, for instance, the aperture of the variable throttle valve 12 is reduced according to the speed reduction operation of the accelerator pedal. Thus, the pressurized fluid passes through the check valve 20 in the third communication passage 14-3 and is resupplied to the motor section 10, which motor section 10 functions as a fluid pump and acts to suppress the torque of the output shaft 8. The torque of the motor section 10 thus can be adjusted to a desired r.p.m.

By depressing the change-over valve 16 as shown by the black arrow in Fig. 1, the motor section 10 can run forwardly to cause advancement of the vehicle. On the other hand, by raising the change-over valve 10 as shown by the white arrow in Fig. 1, the motor section 10 can run backwards to cause retreat backing up of the vehicle.

Thus, the torque of the motor section and output shaft can be varied according to a change in the quantity of discharge of pressurized fluid from the variable flow pump 6. Power transmission can be effected reliably by the pressurized fluid, so that it is possible to improve the acceleration property at the time of the running of the vehicle.

Further, the hydraulic transmission can be simplified in construction, can be readily manufactured, and can be reduced in cost, so that it is very useful in practice.

Further, it is possible to reduce the size and weight of the hydraulic transmission, which contributes to the improvement of the fuel consumption at the time of the running of the vehicle.

Fig. 2 shows a second embodiment of the present invention. In this embodiment, parts serving the same roles as those in the previous first embodiment are designated by like reference numerals.

A feature of the second embodiment resides in that a plurality of. e.g. three, constant pressurized fluid discharge rate pumps 30 are provided in a row for varying the quantity of pressurized fluid discharged from the pump section.

More specifically, three constant discharge rate pumps 30-1 to 30-2 and a first variable throttle valve 32 are provided in parallel relation with one another and connect to the motor section 10. Further, a second variable throttle valve 34 is provided in the second communication passage 14-2 downstream of the change-over valve 16 and upstream of the third communication passage 14-3. One-way check valves 36-1 to 36-3 are provided in the first communication passage 14-1, specifically in the individual branches thereof upstream of the respective constant discharge rate pumps 30-1 to 30-3 and downstream of the third communication passage 14-3. Further, first and second bypass passages 38-1 and 38-2 are provided for the constant discharge rate pumps 30-2 and 30-3, and first and second change-over valves 40-1 and 40-2 are provided in the first and second bypass passages 38-1 and 38-2, respectively.

With the above construction of the second embodiment, in an idling state, in which the prime mover 4 is driven, the first to third constant discharge rate pumps 30-1 to 30-3 discharge the pressurized fluid only slightly, and the first variable throttle valve 32 and first and second change-over valves 40-1 and 40-2 are held in an open state.

At the time of low speed, only the first constant discharge rate pump 30-1 is operated, and the first variable throttle valve 32 is controlled to the closed position side, whereby the pressurized fluid is supplied to the motor section 10 through the first communication passage 14-1 to cause rotation of the motor section 10 and transmit the torque to the output shaft 8. At this low speed, valves 40-1 and 40-2 are open so that the fluid thereof circulates through the respective bypass passages 38-1 and 38-2.

At the time of the middle speed, the first changeover valve 40-1 is closed according to the operation of depressing the accelerator pedal to operate the first and second constant discharge rate pumps 30-1 and 30-2 to supply the pressurized fluid to the motor section 10 through the first communication passage 14-1 so as to cause rotation of the motor section 10 and transmit the torque to the output shaft 8.

Further, at the time of high speed, the first and second change-over valves 40-1 and 40-2 are closed according to the extent of depression of the accelerator pedal to operate the first to third constant discharge rate pumps 30-1 to 30-3 so as to supply the pressurized fluid to the motor section 10 through the first communication passage 14-1, thus causing rotation of the motor section 10 and transmitting the torque to the output shaft 8.

Further, in the absence of load on the prime mover 4, i.e., when only the torque of the output shaft 8 is increased to cause the rotation of the motor section 10 for running up a slope, like the first embodiment. the torque of the motor section 10 can be controlled to a desired r.p.m.

Further, by depressing the change-over valve 16 as shown by the black arrow in Fig. 2, the motor section 10 can be run forwardly. i.e., the vehicle can be advanced. Also, by raising the change-over valve 16 as shown by the white arrow in Fig. 2. the motor section 10 can be run backwardly. i.e., the vehicle can be retreated.

It is to be understood that by using a plurality of inexpensive constant discharge rate pumps such that they are switched according to the load, the quantity of pressurized fluid discharged can be varied. thus permitting the torque of the motor section and output shaft to be varied.

Further, it is possible to simplify the construction of the hydraulic transmission to permit cost reduction. which is very useful.

The above first and second embodiments are by no means limitative and can be variously modified.

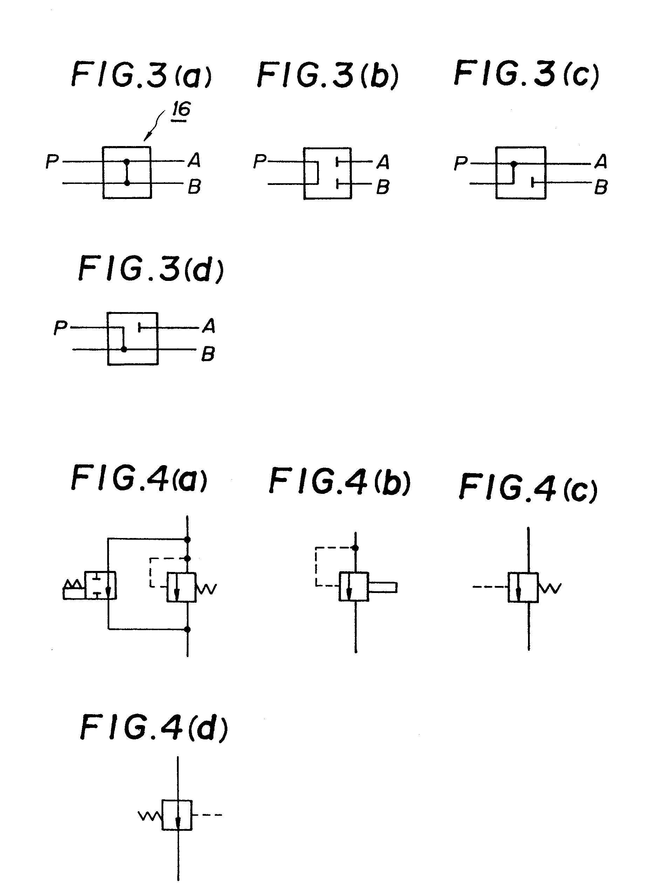

For example. in the above first and second embodiments the change-over valve 16 is of an open-center type as shown in Fig. 3(a). However, it is possible to adopt types shown in Figs. 3(b) to 3(d) or other types.

Further, in the first and second embodiments of the present invention, use is made of a variable throttle valve (such as 12, 32, 34) as a throttle section. However, it is also possible to adopt a pressure control valve or sequence valves having inner or outer pilot systems as shown in Figs. 4(a) to 4(d) or other throttle valve constructions.

As has been described in the foregoing, according to the present invention there are provided a pump section for discharging pressurized fluid, a motor section driven by the pressurized fluid for transmitting torque to an output shaft, and a throttle section for varying the quantity of pressurized fluid discharged from the motor section according to the rotational status of the motor section. Thus, more reliable power transmission compared to the prior art automatic transmission can be obtained, so that it is possible to improve the acceleration property at the time of running of the vehicle. Further, the hydraulic transmission can be simplified in construction, permits ready manufacture, and reduction in cost, so that it is practically useful. Further, it is possible to reduce the size and weight of the hydraulic transmission. which contributes to the improvement of fuel consumption at the time of the running of the vehicle.

## Claims

1. A hydraulic transmission comprising a pump section for discharging pressurized fluid. a motor section driven by the pressurized fluid for transmitting torque to an output shaft. and a throttle section for varying the quantity of pressurized fluid from said motor section according to the rotational status thereof.

2. A hydraulic transmission according to Claim 1, wherein said pump section consists of a variable discharge rate pump.

3. A hydraulic transmission according to Claim 1. wherein said pump section consists of a plurality of constant discharge rate pumps connected in parallel relationship.

4. A hydraulic transmission for a vehicle, the transmission being connectible between the prime mover and the output shaft of the vehicle, comprising:

a variable pump section driven by the prime mover for discharging a pressurized fluid therefrom:

a motor section driven by the pressurized fluid for transmitting torque to the output shaft;

a supply passage for transmitting the pressurized fluid from the pump section to the motor section;

a return passage for returning the fluid from the motor section to the pump section;

a bypass passage connected between said supply and return passages, said bypass passage having first one-way check valve means therein for permitting flow therethrough solely from said return passage to said supply passage;

second one-way check valve means associated with said return passage downstream of said bypass passage for permitting flow therethrough solely back to said pump section;

variable throttle means associated with the return passage at a position upstream of said bypass passage for adjustably controlling the flow of fluid through the return passage; and

reversing valve means associated with both of said supply and return passages for permitting the supply and return passages as connected to the motor section to be reversed for permitting the motor section to be selectively driven in either rotational direction. said reversing valve means being associated with said supply passage at a location downstream of said bypass passage, and being associated with said return passage at a location upstream of said throttle means.

5. A hydraulic transmission for a vehicle, the transmission being connectible between the prime mover and the output shaft of the vehicle, comprising:

a pump section driven by the prime mover for discharging a pressurized fluid therefrom;

a motor section driven by the pressurized fluid for transmitting torque to the output shaft;

a supply passage for transmitting the pressurized fluid from the pump section to the motor section;

a return passage for returning the fluid from the motor section to the pump section;

said supply passage including a main passage which connects to the motor section and at least three auxiliary passages which are disposed in parallel relationship and individually connect between said main passage and said return passage:

said pump section including at least three constant discharge rate pumps. one of said pumps being associated with each of said auxiliary passages;

a one-way check valve associated with each said auxiliary passage at a location downstream of the respective pump for permitting flow therethrough solely in a direction downstream from the respective pump;

a bypass passage connected directly between said main and return passages and having one-way check valve means associated therewith for permitting flow therethrough solely from said return passage to said main passage;

adjustable throttle means associated with said return passage at a location upstream of said bypass passage for adjusting the rate of fluid flow through said return passage; and

bypass fluid control means associated with each of second and third said pumps for permitting the pressurized fluid discharged therefrom to be supplied into the main passage only in response to predetermined vehicle running conditions.

6. A transmission according to Claim 5, including a fourth auxiliary passage connected in parallel with said first-mentioned auxiliary passages, said fourth auxiliary passage having an adjustable fluid throttling means associated therewith.

7. A transmission according to Claim 6, wherein the bypass control means includes a bypass passageway which connects to the auxiliary passage associated with the respective second and third pumps for bypassing the respective said pump. said bypass passageway connecting between a first location upstream of the respective pump and a second location which is downstream of the respective pump but upstream of the respective check valve, said bypass passageway having an openable and closable control valve associated therewith.

8. A transmission according to Claim 7, including selectively shiftable reversing valve means associated with the main and return passages for permitting the supply and return passages as connected to said motor section to be selectively reversed so as to permit the motor section to be rotatably driven in either rotational direction.

# FIG.1

# FIG.2

FIG.3 (a)　　　FIG.3 (b)　　　FIG.3 (c)

FIG.3(d)

FIG.4(a)　　　FIG.4 (b)　　　FIG.4 (c)

FIG.4(d)